# EUROPÄISCHE PATENTSCHRIFT

(11) **EP 0 886 118 B1**
(45) Veröffentlichungstag und Bekanntmachung des Hinweises auf die Patenterteilung: **06.03.2002**
(21) Anmeldenummer: 98890177.3
(22) Anmeldetag: 17.06.1998
(51) Int. Cl.: F27B 7/20, F27B 7/16, C22B 7/00, C22B 21/00

(54) **Verwendung eines Drehtrommelofen zum Umschmelzen von Aluminium**
Use of a rotary drum furnace for remelting aluminium
Utilisation d'un four rotatif pour la refusion de l'aluminium

(30) Priorität: 18.06.1997 AT 105697
(43) Veröffentlichungstag der Anmeldung: 23.12.1998
(73) Patentinhaber: Stöby, Manfred, 5230 Mattighofen (AT)
(72) Erfinder: Stöby, Manfred, 5230 Mattighofen (AT)
(74) Vertreter: Nunnenkamp, Jörg, Dr.

(56) Entgegenhaltungen:
- DE-C- 580 572
- DE-C- 892 382
- FR-A- 2 415 418
- US-A- 2 261 895

## Beschreibung

Die Erfindung bezieht sich auf einen Drehtrommelofen, mit einer dreh- und antreibbar gelagerten Ofentrommel, die einen Trommelmantel aus einer Außenhülle und einer inneren Ausmauerung mit radial einwärts vorstehenden, um den Umfang verteilt angeordneten, Rührkörpern aus Eisen aufweist.

Verschiedene Schmelzprozesse, vor allem auch die Schmelzraffination zur Aufarbeitung von Aluminiumschrotten, werden in Drehtrommelöfen durchgeführt, die über Brenner innen beheizt werden und das eingebrachte Schmelzmaterial während einer gleichförmigen Trommeldrehung zur Umschichtung und Mischung einzuschmelzen erlauben. Um unerwünschte Oxidationsprozesse oder andere chemische Reaktionen zu verhindern, wird das Einschmelzen oft auch in einem Schutzbad vorgenommen, beispielsweise beim Schmelzraffinieren von Aluminiumschrott in einer Salzschmelze. Dabei ist es auch schon bekannt, den Trommelmantel an der Innenseite mit Rührkämmen auszustatten, die das Eintauchen der in den Ofen eingebrachten Schrotteile in die Salzschmelze beschleunigen und das Durchmischen beim Schmelzen verstärken sollen, welche Rührkämme bisher mit der feuer- und hitzefesten Ausmauerung des Trommelmantels mitgemauert werden und axial durchgehende Mauerungsrippen bilden. Diese Rührkämme sind allerdings sehr verschleißanfällig und nutzen sich schnell ab, was dann den Eintauch- und Mischvorgang entsprechend beeinträchtigt und den Schmelzprozess verzögert. Eine Erneuerung der Rührkämme ist wesentlich früher erforderlich als eine Neuausstattung der Trommel mit einer schützenden Ausmauerung, wobei eine solche Erneuerung der Rührkämme zwangsweise auch eine Erneuerung der Ausmauerung und ein langes Stilllegen des Trommelofens bedeutet.

Im Rahmen der DE 580 572 C wird ein Drehtrommelofen des eingangs beschriebenen Aufbaus beschrieben. Dieser dient zum Brennen von Zement, Kalk, Gips oder ähnlichem Gut und greift zu diesem Zweck auf innenseitige Wärmeübertragungskörper zurück, welche die Form von Hohlschaufeln aufweisen. Diese Schaufeln sind mit einer Fläche ausgerüstet, die mit Bezug auf die Bewegungsrichtung des Ofens geneigt ist.

Daneben wird in der DE 892 382 C ein drehbarer Trommelofen zum Schmelzen von Leichtmetallabfällen beschrieben. Dessen Ofenraum ist mit einer Vielzahl wellenförmiger, axial verlaufender Erhebungen ausgerüstet. Hierdurch versucht man, das im Ofeninneren vorhandene Metallbad im Bereich der Trommelwandung umzuwälzen. Zwar fliest das Metall durcheinander und die inneren kälteren Badschichten kommen mit der zumeist heißen Ofenwand in Berührung. Allerdings sind die solchermaßen gebildeten Rührkämme mit den zuvor beschriebenen Nachteilen behaftet.

Der Erfindung liegt das technische Problem zugrunde, einen Drehtrommelofen zu schaffen, welcher sich durch eine wirkungsvolle und aufwandsarme Rührkammausrüstung auszeichnet und einen rationellen Schmelzbetrieb erlaubt.

Zur Lösung dieser Aufgabe ist Gegenstand der Erfindung die Verwendung eines Drehtrommelofens, mit einer dreh- und antreibbar gelagerten Ofentrommel, die einen Trommelmantel aus einer Außenhülle und einer inneren Ausmauerung mit radial einwärts vorstehenden, um den Umfang verteilt angeordeten Rührkörpern aus Eisen aufweist, zum Umschmelzen von Aluminium in einem Schutzbad, insbesondere zum Schmelzraffinieren von Aluminiumschrott in einer Salzschmelze. Nach bevorzugter Ausgestaltung können die Rührkörper jeweils für sich von innen eingebaut oder von außen durch Einbauöffnung des Trommelmantels in diesen eingesetzt werden. Dabei hat sich in überraschender Weise gezeigt, dass Rührkörper aus Eisenwerkstoffen und inbesondere Grauguss beste Ergebnisse hinsichtlich Standzeit und Funktionstüchtigkeit bei einfacher Herstell- und Hantierbarkeit erzielen. Das lässt sich dadurch erklären, dass die Rührkörper beim Schmelzraffinieren von Aluminiumschrott in einer Salzschmelze durch das Eintauchen in die Salzschmelze schnell mit einer Salzkruste überzogen werden, die einen hervorragenden Schutzmantel gegenüber der eigentlichen Aluminiumschmelze bildet und für eine erstaunlich lange Standzeit der Eisenrührkörper sorgt.

Außerdem lassen sich die einzelnen Rührkörper nicht nur von innen oder auch von außen ein- bzw. ausbauen, was das Erneuern verschlissener Rührkörper wesentlich beschleunigt und vereinfacht, sondern sie lassen sich auch an den für die jeweiligen Einrührvorgänge günstigsten Trommelstellen positionieren bzw. umfangseitig und axial entsprechend verteilen, so dass beste Einrühr- und Mischverhältnisse erzielt werden.

Es kommt zu einer Verkürzung der Chargen- und Schmelzzeit, zu einer Verringerung der Umrüstzeit und zu einer Verlängerung der Gesamtstandzeiten, zu einer höheren Metallausbeute, einem besseren Wärmeübergang in das Schmelzgut, zu einer Verringerung des Salzeinsatzes und des Salzschlackenanteils, einer Senkung des Energiebedarfs und damit insgesamt zu einem hohen Wirkungsgrad und einer Rationalisierung des Schmelzvorganges. Weiter lassen sich die Rührkörper verschleißabhängig austauschen, so dass stets einwandfreie Rühr- und Mischbedingungen gewährleistet werden. Das gilt auch vor dem Hintergrund, dass Form und Material der Rührkörper an die jeweiligen Schmelzprozesse anpassbar sind. Selbstverständlich lassen sich die Rührkörper auch in unterschiedlich gestaltete Ofentrommeln einsetzen, seien es reine Drehtrommeln oder Dreh-Kipptrommeln oder dergleichen.

Zweckmäßigerweise sind jeweils drei einen länglichen Querschnitt aufweisende Rührkörper zu wenigstens zwei gegeneinander auf Lücke versetzt angeordneten Rührkörperkränzen zusammengefaßt, wobei die Rührkörper des beschickungsseitigen Rührkörperkranzes zur Trommelachse schräggeneigt, die übrigen achsparallel ausgerichtet sind. Mit geringem Aufwand ergibt sich ein schneller, durchgreifender Einrühr- und Mischeffekt und zusätzlich zur eigentlichen Rührwirkung entsteht im Beschickungsbereich auch ein axialer Fördereffekt, der die eingebrachten Schrotteile in die Trommel weiterfördert und damit ein Anhäufen von Schrott im Beschickungsbereich verhindert, was den Einschmelzvorgang beträchtlich verbessert.

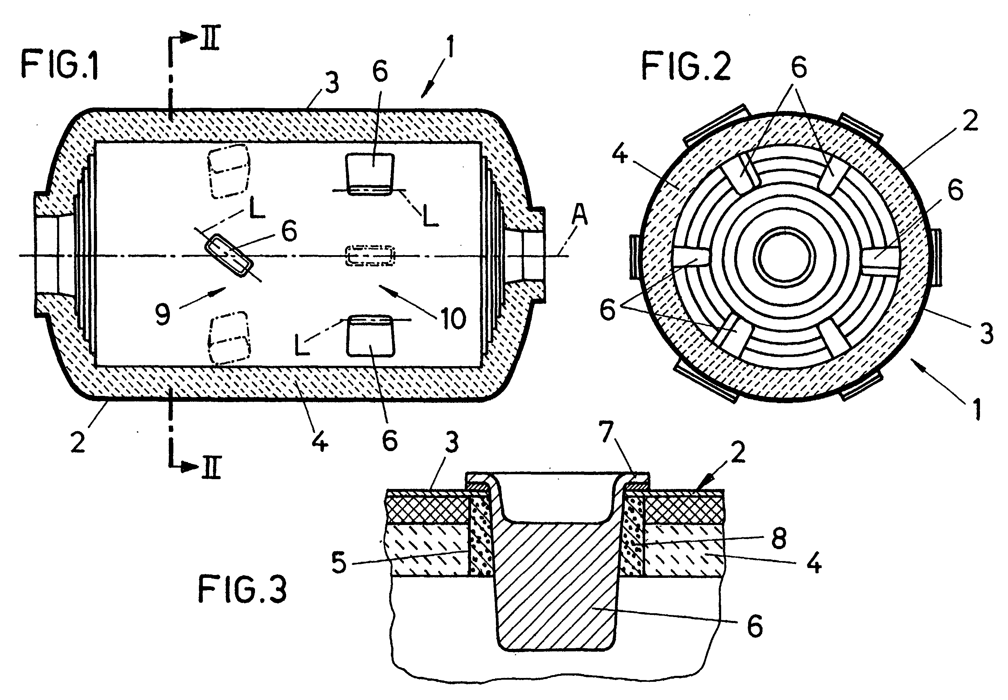

In der Zeichnung ist der Erfindungsgegenstand beispielsweise veranschaulicht, und zwar zeigen
- Fig. 1 und 2: eine Ofentrommel eines erfindungsgemäßen Drehtrommelofens im Axialschnitt bzw. in einem Querschnitt nach der Linie II-II der Fig. 1 sowie
- Fig. 3: einen in der Trommelmantel sitzenden Rührkörper im Schnitt größeren Maßstabes.

Eine Ofentrommel 1 eines nicht weiter dargestellten Drehtrommelofens weist einen Trommelmantel 2 auf, der aus einer Stahlblechaußenhülle 3 und einer doppelschichtigen isolierenden und hitze- und feuerfesten Auskleidung 4 besteht. In einzelnen Einbauöffnungen 5 des Trommelmantels 2 sind Rührkörper 6 aus Grauguß eingesetzt, welche Rührkörper 6 außen mit Befestigungsflanschen 7 am Trommelmantel festgeschraubt und im Mauerungsbereich mit Betonguß 8 zur Abdichtung und Stabilisierung hinterfüllt werden.

Die Rührkörper 6 sind zu zwei Rührkörperkränzen 9, 10 mit jeweils drei Rührkörpern 6 zusammengefaßt, wobei die Rührkörper 6 der beiden Kränze 9, 10 gegeneinander auf Lücke versetzt sind. Die Rührkörper selbst besitzen einen länglichen Querschnitt, wobei die Längsrichtung L der Querschnitte bei den Rührkörpem 6 des beschickungsseitigen Rührkörperkranzes 9 zur Trommelachse A schräggeneigt, die Längsrichtung L der Rührkörper 6 des anderen Rührkörperkranzes 10 aber axial ausgerichtet sind.

Die Ofentrommel 1 zeichnet sich durch ihre besonders wirkungsvolle Rührkörperausstattung aus, welche Rührkörper einzeln und ohne die Mantelausmauerung zu zerstören von außen ausgetauscht werden können.

## Patentansprüche

1. Verwendung eines Drehtrommelofens, mit einer dreh- und antreibbar gelagerten Ofentrommel (1), die einen Trommelmantel (2) aus einer Außenhülle (3) und einer inneren Ausmauerung (4) mit radial einwärts vorstehenden, um den Umfang verteilt angeordneten Rührkörpern (6) aus Eisen aufweist, zum Umschmelzen von Aluminium in einem Schutzbad, insbesondere zum Schmelzraffinieren von Aluminiumschrott in einer Salzschmelze.

2. Verwendung nach Anspruch 1, **dadurch gekennzeichnet, dass** die Rührkörper (6) jeweils für sich von innen eingebaut werden oder von außen durch Einbauöffnungen (5) des Trommelofens (2) einsetzbar sind.

3. Verwendung nach Anspruch 1 oder 2, **dadurch gekennzeichnet, dass** jeweils drei Rührkörper (6) zu wenigstens zwei gegeneinander auf Lücke versetzt angeordneten Rührkörperkränzen (9, 10) zusammengefasst sind, wobei die Rührkörper (6) des beschickungsseitigen Rührkörperkranzes (9) zur Trommelachse (A) schräggeneigt, die übrigen achsparallel sind.

4. Verwendung nach einem der Ansprüche 1 bis 3, **dadurch gekennzeichnet, dass** die Rührkörper (6) aus Grauguss gefertigt sind.

## Claims

1. Use of a rotary drum type kiln comprising a kiln drum (1) which is mounted so that it can be rotated and driven and which comprises a drum shell (2) having an outer shell (3) and an internal brick lining (4) comprising radially inwardly protruding agitator bodies (6) made of iron, which are disposed distributed around the periphery, for the remelting of aluminium in a protective bath, particularly for the melt-refining of aluminium scrap in a salt melt.

2. A use according to claim 1, **characterised in that** the agitator bodies (6) are each installed separately from the inside or can be inserted from the outside through installation openings (5) in the drum kiln (2).

3. A use according to claims 1 or 2, **characterised in that** each three agitator bodies (6) are assembled to form at least two agitator body rings (9, 10) which are offset in relation to each other with a gap between them, wherein the agitator bodies (6) of the agitator body ring (9) on the charging side are inclined in relation to the drum axis (A) and the others are parallel to said axis.

4. A use according to any one of claims 1 to 3, **characterised in that** the agitator bodies (6) are made of gray cast iron.

## Revendications

1. Utilisation d'un four à tambour rotatif comportant un tambour de four (1) qui est monté de manière à pouvoir tourner et à être entraîné et qui comporte une enveloppe de tambour (2) constituée d'une enveloppe extérieure (3) et d'une maçonnerie intérieure (4) avec des corps d'agitation (6) en fer, en saillie radialement vers l'intérieur et répartis sur le pourtour, pour transformer par fusion de l'aluminium dans un bain de protection, en particulier pour l'affinage par fusion de déchets d'aluminium dans un bain de sel.

2. Utilisation selon la revendication 1, **caractérisée en ce que** les corps d'agitation (6) sont montés séparément de l'intérieur, ou peuvent être insérés de l'extérieur à travers des ouvertures de montage (5) du four à tambour (2).

3. Utilisation selon la revendication 1 ou 2, **caractérisée en ce que** trois corps d'agitation (6) sont réunis chaque fois en au moins deux couronnes de corps d'agitation (9, 10) disposées décalées l'une par rapport à l'autre, les corps d'agitation (6) de la couronne de corps d'agitation (9) côté chargement étant inclinés par rapport à l'axe de tambour (A), les autres étant parallèles à l'axe.

4. Utilisation selon l'une des revendications 1 à 3, **caractérisée en ce que** les corps d'agitation (6) sont fabriqués en fonte grise.
